# EUROPÄISCHE PATENTANMELDUNG

(11) **EP 0 678 461 A1**
(43) Veröffentlichungstag der Anmeldung: **25.10.1995**
(21) Anmeldenummer: 95250084.1
(22) Anmeldetag: 05.04.1995
(51) Int. Cl.: B65G 1/04

(54) **Hochregal**

(30) Priorität: 19.04.1994 DE 4416103
(71) Anmelder: Bellheimer Metallwerk GmbH, D-76752 Bellheim (DE)
(72) Erfinder: Hölscher, Jürgen, D-61462 Königstein (DE); Siegler, Adrian, D-76756 Bellheim (DE)
(74) Vertreter: Böning, Manfred, Dr.-Ing.

(57) **Zusammenfassung**

Bei einem Hochregal mit zwei Regalsäulen (2,3) und einem zwischen diesen angeordneten Vertikalförderer (6) sind die Böden (9) von durch den Vertikalförderer (6) in die Fächer der Regalsäulen (2,3) überführbaren Tablaren (7) mit jeweils mindestens einer Ausnehmung (11,12) versehen, durch die hindurch im Bereich der Beschickungs- bzw. Entnahmeöffnung (13) des Regales Teile (20) eines Hilfsförderers (21) mit auf den Tablaren (7) angeordneten Gegenständen (22) in Eingriff bringbar sind, um letztere ein- bzw. auszulagern.

## Beschreibung

Die Erfindung betrifft ein Hochregal mit zwei, übereinander angeordnete Fächer aufweisenden Regalsäulen, von denen mindestens eine mit einer Beschickungs- bzw. Entnahmeöffnung versehen ist und zwischen denen ein mit ihnen eine Einheit bildender Vertikalförderer angeordnet ist, der eine Horizontalfördereinrichtung aufweist, mit deren Hilfe jeweils ein Tablar aus dem Bereich der Beschickungs- bzw. Entnahmeöffnung in ein vom Vertikalförderer angesteuertes Fach überführbar oder aber aus einem Fach entnehmbar und nach Rückführung in den Bereich der Beschickungs- bzw. Entnahmeöffnung durch den Vertikalförderer von dessen Plattform aus in den Bereich der Beschickungs- bzw. Entnahmeöffnung förderbar ist.

Bei einem aus der DE 42 33 688 A1 bekannten Hochregal der vorstehenden Art weisen die als Lagergutbehälter verwendeten Tablare einen durchgehenden Boden und eine sich von diesem nach oben erstreckende, die Ladefläche begrenzende Wandung auf, die ein Herunterrutschen des Ladegutes von der Ladefläche verhindert. Auf den Tablaren lassen sich je nach Bedarf unterschiedliche Produkte entweder unmittelbar oder aber in Behältern abstellen, wobei die Beschickung der Tablare bzw. die Entnahme von Gegenständen entweder im Bereich der Beschickungs- bzw. Entnahmeöffnung oder aber an einer vom Hochregal entfernten Stelle erfolgt, an die die Tablare zusammen mit dem Ladegut mittels eines geeigneten Fördersystems weiterbefördert wurden. Im zuletzt genannten Fall vermag die bekannte Lösung dann nicht zu befriedigen, wenn beispielsweise auf einem Tablar mehrere Gegenstände nebeneinander abgestellt sind, von denen an einer regalfernen Stelle nur einer benötigt wird, oder wenn ein einzelner auf dem Tablar abgestellter Behälter oder Gegenstand in einem dem Hochregal nachgeschalteten Förder- oder Verteilsystem ohne Tablar beförderbar ist. Ausgehend von dieser Erkenntnis liegt der Erfindung die Aufgabe zugrunde, ein Hochregal der in Betracht gezogenen Gattung so auszubilden, daß im Bereich seiner Beschickungs- bzw. Entnahmeöffnung ein automatisches Be- und Entladen der Tablare möglich ist. Diese Aufgabe wird erfindungsgemäß dadurch gelöst, daß die Böden der Tablare mit mindestens einer Ausnehmung versehen sind, durch die im Bereich der Beschickungs- bzw. Entnahmeöffnung Teile eines Hilfsförderers mit auf den Tablaren abgestellten Gegenständen in Eingriff bringbar sind, um diese einzeln oder zu mehreren ein- oder auszulagern.

Das erfindungsgemäße Hochregal bietet u.a. den Vorteil, daß die Zahl der erforderlichen Tablare einzig und allein von der Kapazität des Hochregales abhängt und daß dem Hochregal Förder- bzw. Verteilsysteme nachgeschaltet werden können, deren Abmessungen auf die regelmäßig gegenüber den Abmessungen der Tablare kleineren Abmessungen der auf den Tablaren zu lagernden Gegenstände abgestimmt werden können, um auf diese Weise die Kosten für die Förder- bzw. Verteilsysteme klein zu halten.

Weitere Einzelheiten und Merkmale der Erfindung ergeben sich aus den Unteransprüchen, der beigefügten Zeichnung und der nachstehenden Beschreibung. Es zeigen:
Fig. 1 die perspektivische Ansicht eines Hochregales und eines mit diesem gekoppelten Fördersystems und
Fig. 2 - 5 schematisch zwei Möglichkeiten des Zusammenspiels zwischen einem Tablar und dem Hilfsförderer des Hochregales gemäß Fig. 1.

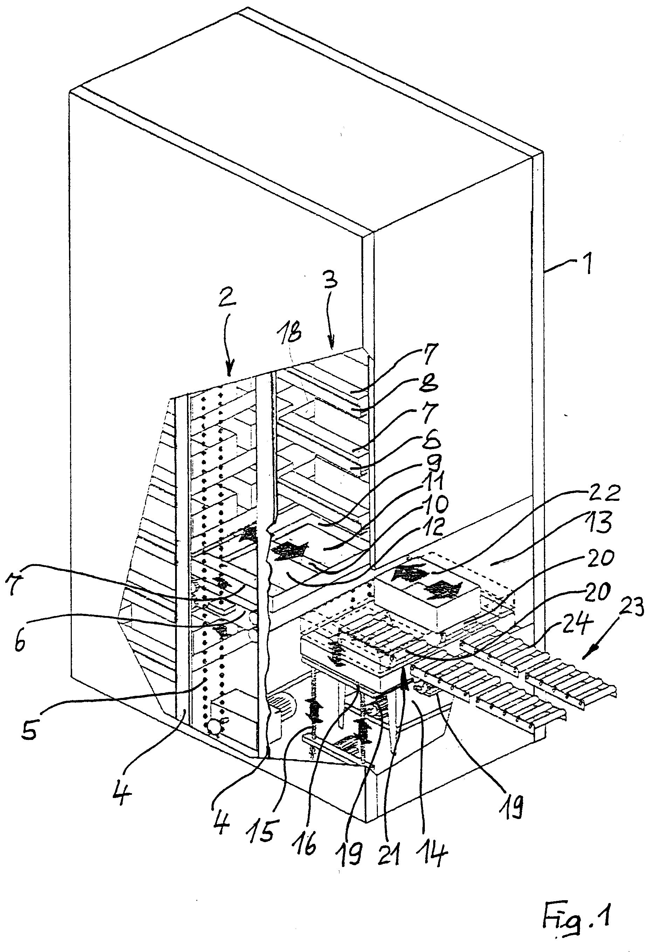

In Figur 1 ist 1 das Gehäuse des Hochregales mit Regalsäulen 2 und 3, zwischen denen an Führungsschienen 4 auf- und abbewegbar ein durch eine Kette angetriebener Vertikalförderer 6 angeordnet ist. Der Vertikalförderer 6 ist in bekannter, in der Zeichnung nicht dargestellter Weise mit einer Horizontalfördereinrichtung versehen, durch die Tablare 7 entweder von seiner Plattform in die Fächer der Regalsäulen oder von diesen auf die Plattform überführbar sind. Die Horizontalfördereinrichtung ist zu diesem Zweck mit zwei im Abstand voneinander angeordneten Ketten ausgestattet, an denen - wie aus der DE 42 33 690 A1 bekannt - Mitnehmer befestigt sind, mittels derer Hin- und Herbewegungen in die Tablare 7 eingeleitet werden können.

Die einzelnen Fächer der Regalsäulen 2 und 3 werden von jeweils paarweise angeordneten Stützschienen 8 gebildet, die die Tablare 7 an sich gegenüberliegenden Seiten abstützen.

Die Böden 9 der Tablare 7 sind nicht geschlossen, sondern weisen bei der dargestellten Ausführungsform zwei durch einen Quersteg 10 voneinander getrennte Ausnehmungen 11 und 12 auf.

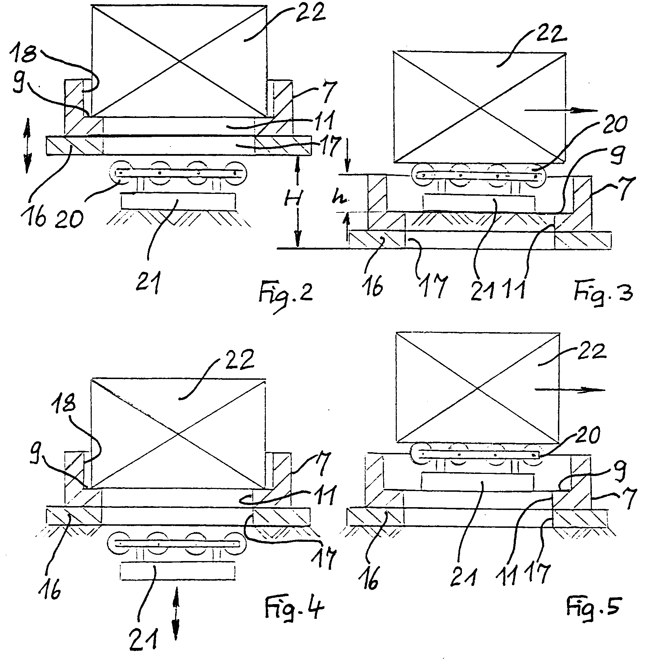

Während die Regalsäule 2 sich im wesentlichen vom Boden des Gehäuses 1 bis zu dessen oberen Ende erstreckt, ist die Regalsäule 3 verkürzt ausgebildet, um Platz für eine Beschickungs- bzw. Entnahmeöffnung 13 zu schaffen, die mit einem Hubtisch 14 ausgestattet ist, dessen mittels Spindeln 15 auf- und abbewegbare Platte 16 den Ausnehmungen 11 und 12 entsprechende Ausnehmungen aufweist, von denen in den Figuren 2 und 3 eine mit der Ausnehmung 11 fluchtende Ausnehmung 17 dargestellt ist.

Durch Absenken der Platte 16 um einen Betrag H, der größer ist als die Höhe h der sich vom Boden 9 des Tablars 7 nach oben erstreckenden Wandung 18, lassen sich die durch Motoren 19 antreibbaren Rollen 20 zweier nebeneinander angeordneter Rollenbahnen eines Hilfsförderers 21 mit einem auf dem Tablar 7 abgestellten Gegenstand 22 in Eingriff bringen, so daß dieser durch den Hilfsförderer 21 auf ein dem Hochregal nachgeschaltetes Fördersystem 23 überführbar ist, dessen ebenfalls angetriebene Rollen 24 im wesentlichen in einer Ebene mit den Rollen 20 des Hilfsförderers liegen. Selbstverständlich kann auf die gleiche Art und Weise durch Umkehr der Drehrichtung der Rollen 24 und 20 ein Gegenstand in das Hochregal eingelagert werden.

Anstatt wie im Falle der Ausführungsform gemäß den Figuren 1 bis 3 die Platte 16 des Hubtisches 14 auf- und abzubewegen, kann, wie in den Figuren 4 und 5 dargestellt, die Beschickungs- bzw. Entnahmeöffnung 13 auch mit einer stationären Platte 16 und einem auf- und abbewegbaren Hilfsförderer 21 ausgestattet sein.

## Patentansprüche

1. Hochregal mit zwei, übereinander angeordnete Fächer aufweisenden Regalsäulen, von denen mindestens eine mit einer Beschickungs- bzw. Entnahmeöffnung versehen ist und zwischen denen ein mit ihnen eine Einheit bildender Vertikalförderer angeordnet ist, der eine Horizontalfördereinrichtung aufweist, mit deren Hilfe jeweils ein Tablar aus dem Bereich der Beschickungs- bzw. Entnahmeöffnung in ein vom Vertikalförderer angesteuertes Fach überführbar oder aber aus einem Fach entnehmbar und nach Rückführung in den Bereich der Beschickungs- bzw. Entnahmeöffnung durch den Vertikalförderer von dessen Plattform aus in den Bereich der Beschickungs- bzw. Entnahmeöffnung förderbar ist, **dadurch gekennzeichnet**, daß die Böden (9) der Tablare (7) mit mindestens einer Ausnehmung (11,12) versehen sind, durch die im Bereich der Beschickungs- bzw. Entnahmeöffnung (13) Teile (20) eines Hilfsförderers (21) mit auf den Tablaren (7) abgestellten Gegenständen (22) in Eingriff bringbar sind, um diese einzeln oder zu mehreren ein- oder auszulagern.

2. Hochregal nach Anspruch 1, **dadurch gekennzeichnet**, daß der Hilfsförderer (21) und/oder das jeweils in den Bereich der Beschickungs- bzw. Entnahmeöffnung (13) überführte Tablar (7) um begrenzte Beträge auf- und abbewegbar ist bzw. sind.

3. Hochregal nach Anspruch 1 oder 2, **dadurch gekennzeichnet**, daß der Hilfsförderer (21) als Rollenförderer ausgebildet ist.

4. Hochregal nach einem oder mehreren der Ansprüche 1 bis 3, **dadurch gekennzeichnet**, daß der Hilfsförderer (21) eine Brücke zwischen dem Tablar (7) und einem mit dem Hochregal gekoppelten Förder- und/oder Verteilsystem (23) bildet.

5. Hochregal nach einem oder mehreren der Ansprüche 1 bis 4, **dadurch gekennzeichnet**, daß der Hilfsförderer (21) aus mehreren unabhängig voneinander antreibbaren Teilförderern besteht.

6. Hochregal nach einem oder mehreren der Ansprüche 2 bis 5, **dadurch gekennzeichnet**, daß die Tablare (7) mit einer ihre Ladefläche (9) begrenzenden Wandung (18) versehen sind, deren Höhe (h) kleiner ist als der Betrag (H) der möglichen Relativbewegung zwischen dem Hilfsförderer (21) und dem Tablar (7).

7. Hochregal nach einem oder mehreren der Ansprüche 1 bis 6**, dadurch gekennzeichnet**, daß zur Abstützung der Tablare (7) im Bereich der Beschickungs- und Entnahmeöffnung (13) eine mit mindestens einer Ausnehmung (17) angeordnete Platte (16) eines Tisches angeordnet ist.

8. Hochregal nach Anspruch 7, **dadurch gekennzeichnet**, daß der Tisch als Hubtisch (14) ausgebildet ist.

9. Hochregal nach Anspruch 7, **dadurch gekennzeichnet**, daß der Hilfsförderer (21) auf- und abbewegbar ist.
